(19) Europäisches Patentamt
European Patent Office
Office européen des brevets

(11) **EP 4 299 541 A1**

(12) **EUROPEAN PATENT APPLICATION**
published in accordance with Art. 153(4) EPC

(43) Date of publication:
**03.01.2024 Bulletin 2024/01**

(21) Application number: **22832776.3**

(22) Date of filing: **10.06.2022**

(51) International Patent Classification (IPC):
**C03C 13/02** (2006.01)        **B29C 70/12** (2006.01)
**B29C 70/28** (2006.01)

(52) Cooperative Patent Classification (CPC):
**B29C 70/12; B29C 70/28; C03C 13/00**

(86) International application number:
**PCT/JP2022/023493**

(87) International publication number:
**WO 2023/276619 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2021 JP 2021107959**

(71) Applicant: **Nitto Boseki Co., Ltd.
Fukushima-shi
Fukushima 960-8161 (JP)**

(72) Inventors:
• **NUKUI, Yosuke**
**Fukushima-shi, Fukushima 960-8161 (JP)**
• **KOMUKAI, Tatsuya**
**Fukushima-shi, Fukushima 960-8161 (JP)**

(74) Representative: **Schön, Christoph
Dr. Schön, Neymeyr & Partner mbB
Bavariaring 26
80336 München (DE)**

(54) **GLASS COMPOSITION FOR GLASS FIBERS, GLASS FIBER, AND GLASS FIBER-REINFORCED RESIN MOLDED ARTICLE**

(57)    Provided is a glass composition for glass fiber that has a broad working temperature range and can suppress occurrence of a difference in an elastic modulus from that of E-glass fiber. The glass composition for glass fiber includes 45.60 to 59.00% by mass of $SiO_2$, 0.00 to 8.00% by mass of $B_2O_3$, 10.00 to 16.00% by mass of $Al_2O_3$, 17.00 to 25.00% by mass of CaO, 0.01 to 9.50% by mass of $TiO_2$, less than 0.03% by mass of $P_2O_5$, 0.00 to 9.50% by mass of ZnO, 0.00 to 2.00% by mass of $SO_3$, 0.01 to 11.50% by mass in total of ZnO and $SO_3$, and 0.00 to 2.00% by mass in total of $Li_2O$, $Na_2O$, and $K_2O$, with respect to the total amount. The $SiO_2$ content SI, the $B_2O_3$ content B, the $TiO_2$ content T, the ZnO content Z, and the $SO_3$ content SO satisfy the following formula (1).

$$1.79 \leq (SI/B) \times T/(Z + SO)^{1/4} \leq 122.98 \quad (1)$$

**EP 4 299 541 A1**

**Description**

Technical Field

The present invention relates to a glass composition for glass fiber, glass fiber, and a glass-fiber-reinforced resin molded article (product).

Background Art

Conventionally, glass fiber-reinforced resin molded products containing E glass fiber (glass fiber comprising an E glass composition) have been widely used as metal substitute materials such as automobile parts, because of their contribution to environmental load reduction as a result of improved fuel efficiency associated with weight reduction.
With a growing interest in recycling in recent years, removing E glass fiber from glass fiber-reinforced resin molded products and recycling the same have been considered in view of further reducing environmental loads. A known method for removing glass fiber from glass fiber-reinforced resin molded products includes dry-distilling chips of glass fiber-reinforced plastic wastes at a pyrolysis temperature of 320 to 600°C in a pyrolysis chamber, contacting the decomposition gas after the pyrolysis with water to recover a liquid component of the decomposition product, and also recovering the glass fiber (e.g., see Patent Literature 1).

Citation List

Patent Literature

Patent Literature 1: Japanese Patent Laid-Open No. H6-234879

Summary of Invention

Technical Problem

However, in manufacturing glass fiber-reinforced resin molded products by injection molding using E glass fiber recovered from glass fiber-reinforced resin molded products such as glass fiber-reinforced plastic wastes (hereinafter, may be referred to as recovered glass fiber), the workability deteriorates, which is a problem. The deterioration of the workability specifically means that, when recovered glass fiber and a resin are kneaded to produce resin pellets for injection molding, the recovered glass fiber clogs in the kneader and thus resin pellets cannot be produced.
The present inventors have made studies on the problem to find that the deterioration of the workability can be overcome by melting a glass raw material including recovered glass fiber to form molten glass and spinning the molten glass to form glass fiber.
However, when a glass raw material containing recovered glass fiber is used to obtain glass fiber as described above, the working temperature range, which is a temperature range in which glass fiber can be stably spun, disadvantageously becomes narrower. Moreover, a difference in the elastic modulus occurs from that of normal E glass fiber, in which no glass composition containing recovered glass fiber is used as the glass raw material, and thus the same quality control as that for normal E glass fiber disadvantageously cannot be conducted.
The present inventors have made intensive studies on the disadvantages to find that a substance derived from additives other than E glass fiber included in a glass fiber-reinforced resin molded product (in particular, inorganic material) remains on the surface of recovered glass fiber, when glass fiber is manufactured with a glass composition containing the recovered glass fiber as a glass raw material, the composition of the glass fiber varies due to the substance derived from the additives, which results in narrowing of the working temperature range of the glass and occurrence of a difference in the elastic modulus from that of normal E glass fiber.
The present inventors have made further studies based on the finding to find that a substance identical to the substance derived from the additives may be included as impurities also in a glass fiber mineral material as a glass raw material and that, when a glass raw material is prepared using a glass fiber mineral material including a substance identical to the substance derived from the additives as impurities, the working temperature range of the glass becomes narrower, and a difference in the elastic modulus occurs from that of normal E glass fiber.
An object of the present invention is thus to provide a glass composition for glass fiber that can suppress occurrence of an elastic modulus difference from that of normal E glass fiber while maintaining a broad working temperature range, even under influence of a substance identical to a substance derived from the additives.

Solution to Problem

In order to achieve the object, the glass composition for glass fiber of the present invention includes $SiO_2$ in the range of 45.60 to 59.00% by mass, $B_2O_3$ in the range of 0.00 to 8.00% by mass, $Al_2O_3$ in the range of 10.00 to 16.00% by mass, CaO in the range of 17.00 to 25.00% by mass, $TiO_2$ in the range of 0.01 to 9.50% by mass, $P_2O_5$ in the range of less than 0.03% by mass, ZnO in the range of 0.00 to 9.50% by mass, $SO_3$ in the range of 0.00 to 2.00% by mass, ZnO and $SO_3$ in the range of 0.01 to 11.50% by mass in total, and $Li_2O$, $Na_2O$, and $K_2O$ in the range of 0.00 to 2.00% by mass in total, with respect to the total amount of the glass composition for glass fiber, and the content SI of $SiO_2$, the content B of $B_2O_3$, the content T of $TiO_2$, the content Z of ZnO, and the content SO of $SO_3$ satisfy the following formula (1):

$$1.79 \leq (SI/B) \times T/(Z + SO)^{1/4} \leq 122.98 \qquad (1).$$

According to the glass composition for glass fiber according to the present invention, when the content of $SiO_2$, the content of $B_2O_3$, the content of $Al_2O_3$, the content of CaO, the content of $TiO_2$, the content of $P_2O_5$, the content of ZnO, the content of $SO_3$, the total content of ZnO and $SO_3$, and the total content of $Li_2O$, $Na_2O$, and $K_2O$ are each in the range, with respect to the total amount of the glass composition for glass fiber, and additionally the content SI of $SiO_2$, the content B of $B_2O_3$, the content T of $TiO_2$, the content Z of ZnO, and the content SO of $SO_3$ satisfy the formula (1), even under influence of a substance identical to the substance derived from additives remaining on the surface of glass fiber recovered from a glass fiber-reinforced resin molded product including E glass fiber, occurrence of an elastic modulus difference from that of normal E glass fiber can be suppressed while a broad working temperature range is maintained.

Specifically, in the glass composition for glass fiber of the present invention, when the content SI of $SiO_2$, the content B of $B_2O_3$, the content T of $TiO_2$, the content Z of ZnO, and the content SO of $SO_3$ satisfy the formula (1), the working temperature in spinning glass fiber can be 75°C or more, and the difference in the elastic modulus from that of normal E glass fiber can be 5% or less. The working temperature is a difference between the 1000 poise temperature and the liquid phase temperature in spinning glass fiber, and when the working temperature is 75°C or more, stable spinning can be achieved.

Here, normal E glass fiber is glass fiber comprising an E glass composition, having an elastic modulus (Young's modulus) of 88.0 GPa measured by an ultrasonic pulse method and a thermal expansion coefficient of 5.6 ppm/°C. The elastic modulus and the thermal expansion coefficient can be measured by methods described below. The E glass composition is a composition including $SiO_2$ in the range of 52.0 to 56.0% by mass, $Al_2O_3$ in the range of 12.0 to 16.0% by mass, MgO and CaO in the range of 20.0 to 25.0% by mass in total, and $B_2O_3$ in the range of 5.0 to 10.0% by mass, with respect to the total amount of the glass fiber.

In the glass composition for glass fiber of the present invention, the content SI of $SiO_2$, the content B of $B_2O_3$, the content T of $TiO_2$, the content Z of ZnO, and the content SO of $SO_3$ preferably satisfy the following formula (2), more preferably satisfy the following formula (3):

$$2.91 \leq (SI/B) \times T/(Z + SO)^{1/4} \leq 22.47 \qquad (2);$$

$$5.37 \leq (SI/B) \times T/(Z + SO)^{1/4} \leq 21.01 \qquad (3).$$

In the glass composition for glass fiber of the present invention, when the content SI of $SiO_2$, the content B of $B_2O_3$, the content T of $TiO_2$, the content Z of ZnO, and the content SO of $SO_3$ satisfy the formula (2), the working temperature in spinning glass fiber can be 75°C or more, and the difference in the elastic modulus from that of normal E glass fiber can be 1.0 GPa or less.

In the glass composition for glass fiber of the present invention, when the content SI of $SiO_2$, the content B of $B_2O_3$, the content T of $TiO_2$, the content Z of ZnO, and the content SO of $SO_3$ satisfy the formula (3), the working temperature in spinning glass fiber can be 75°C or more, the difference in the elastic modulus from that of normal E glass fiber can be 1.0 GPa or less, and the difference in the thermal expansion coefficient from that of normal E glass fiber can be less than 0.1 ppm/°C.

The glass fiber of the present invention is formed from any of the glass compositions for glass fiber.

The glass fiber-reinforced resin molded product of the present invention includes the glass fiber.

Description of Embodiments

Hereinafter, embodiments of the present invention will be described in detail.

The glass composition for glass fiber of the present embodiment includes, with respect to the total amount of the glass composition for glass fiber, $SiO_2$ in the range of 45.60 to 59.00% by mass, $B_2O_3$ in the range of 0.00 to 8.00% by mass, $Al_2O_3$ in the range of 10.00 to 16.00% by mass, CaO in the range of 17.00 to 25.00% by mass, $TiO_2$ in the range of 0.01 to 9.50% by mass, $P_2O_5$ in the range of less than 0.03% by mass, ZnO in the range of 0.00 to 9.50% by mass, $SO_3$ in the range of 0.00 to 2.00% by mass, ZnO and $SO_3$ in the range of 0.01 to 11.50% by mass in total, and $Li_2O$, $Na_2O$, and $K_2O$ in the range of 0.00 to 2.00% by mass in total, and the content SI of $SiO_2$, the content B of $B_2O_3$, the content T of $TiO_2$, the content Z of ZnO, and the content SO of $SO_3$ satisfy the following formula (1).

$$1.79 \leq (SI/B) \times T/(Z + SO)^{1/4} \leq 122.98 \qquad (1).$$

When the glass composition for glass fiber of the present embodiment has a content of $SiO_2$ of less than 45.60% by mass with respect to the total amount of the glass composition for glass fiber, the mechanical strength of the glass fiber obtained from the glass composition for glass fiber is greatly reduced, and the function of the glass fiber as a reinforcing material in the glass fiber-reinforced resin composition is impaired. In addition, the glass fiber tends to deteriorate when placed in an acidic environment. On the other hand, when the content of $SiO_2$ is more than 59.00% by mass with respect to the total amount of the glass composition for glass fiber, the viscosity at high temperatures increases. Thus, the temperature at which the glass raw material is melted rises, and from the viewpoint of production cost, the glass composition for glass fiber of the present embodiment will not be suitable for industrial glass fiber production.

The glass composition for glass fiber of the present embodiment has a content of $SiO_2$ with respect to the total amount of the glass composition for glass fiber preferably in the range of 48.60 to 57.40% by mass, more preferably in the range of 49.60 to 56.90% by mass, still more preferably in the range of 50.10 to 55.90% by mass, particularly preferably in the range of 50.60 to 55.40% by mass, and most preferably in the range of 51.10 to 54.90% by mass.

When the glass composition for glass fiber of the present embodiment has a content of $B_2O_3$ of more than 8.00% by mass with respect to the total amount of the glass composition for glass fiber, in the case where volatiles in melting increase and thus the operation period extends for a long period, which leads to deterioration of the spinning productivity or shortening of the furnace life, and thus desired productivity cannot be achieved.

The glass composition for glass fiber of the present embodiment has a content of $B_2O_3$ with respect to the total amount of the glass composition for glass fiber preferably in the range of 2.60 to 7.40% by mass, more preferably in the range of 3.10 to 6.90% by mass, still more preferably in the range of 3.60 to 6.70% by mass, particularly preferably in the range of 4.10 to 6.70% by mass, especially preferably in the range of 4.60 to 6.40% by mass, markedly preferably in the range of 5.10 to 6.40% by mass, and most preferably in the range of 5.60 to 6.40% by mass.

The glass composition for glass fiber of the present embodiment, when having a content of $Al_2O_3$ of less than 10.00% by mass with respect to the total amount of the glass composition for glass fiber, is more likely to devitrify. On the other hand, when the content of $Al_2O_3$ is more than 16.00% by mass with respect to the total amount of the glass composition for glass fiber, the viscosity of glass at high temperatures increases. Thus, the temperature at which the glass raw material is melted rises, and from the viewpoint of production cost, the glass composition for glass fiber of the present embodiment will not be suitable for industrial glass fiber production.

The glass composition for glass fiber of the present embodiment has a content of $Al_2O_3$ with respect to the total amount of the glass composition for glass fiber preferably in the range of 10.60 to 15.40% by mass, more preferably in the range of 11.10 to 15.10% by mass, still more preferably in the range of 11.60 to 14.90% by mass, particularly preferably in the range of 11.90 to 14.70% by mass, and most preferably in the range of 12.40 to 14.40% by mass.

When the glass composition for glass fiber of the present embodiment has a content of CaO of less than 17.00% by mass with respect to the total amount of the glass composition for glass fiber, the viscosity of glass at high temperatures increases, and thus the meltability deteriorates. On the other hand, when the content of CaO is more than 25.00% by mass with respect to the total amount of the glass composition for glass fiber, a devitrified product is more easily formed in the bushing, which devitrified product is responsible for cut during spinning or responsible for glass fiber including the devitrified product.

The glass composition for glass fiber of the present embodiment has a content of CaO with respect to the total amount of the glass composition for glass fiber preferably in the range of 18.10 to 24.40% by mass, more preferably in the range of 19.10 to 23.90% by mass, still more preferably in the range of 19.60 to 23.40% by mass, particularly preferably in the range of 20.60 to 23.10% by mass, and most preferably in the range of 21.10 to 22.90% by mass.

When the glass composition for glass fiber of the present embodiment has a content of $TiO_2$ of less than 0.01% by mass with respect to the total amount of the glass composition for glass fiber, the viscosity at high temperatures increases. Thus, the temperature at which the glass raw material is melted rises, and from the viewpoint of production cost, the glass composition for glass fiber of the present embodiment will not be suitable for industrial glass fiber production. When the content of $TiO_2$ is more than 9.50% by mass with respect to the total amount of the glass composition for glass fiber, the elastic modulus of the glass fiber formed from the composition of the glass composition for glass fiber of the present embodiment increases to significantly deviate from the elastic modulus of normal E glass. Also, the liquid phase temperature of the glass composition for glass fiber greatly increases, and thus stable manufacturing of glass fiber cannot be conducted. The glass is colored, and the refractive index thereof markedly deviates from the refractive index of normal E glass.

The glass composition for glass fiber of the present embodiment has a content of $TiO_2$ with respect to the total amount of the glass composition for glass fiber preferably in the range of 0.10 to 4.90% by mass, more preferably in the range of 0.20 to 3.90% by mass, still more preferably in the range of 0.30 to 2.40% by mass, particularly preferably in the range of 0.50 to 1.40% by mass, and most preferably in the range of 0.60 to 1.10% by mass.

When the glass composition for glass fiber of the present embodiment has a content of $P_2O_5$ of 0.03% by mass or more with respect to the total amount of the glass composition for glass fiber, good spinning productivity cannot be achieved due to an increase in the liquid phase temperature.

The glass composition for glass fiber of the present embodiment has a content of $P_2O_5$ with respect to the total amount of the glass composition for glass fiber preferably in the range of 0.01% by mass or more and less than 0.03% by mass, more preferably in the range of 0.01 to 0.02% by mass.

When the glass composition for glass fiber of the present embodiment has a content of ZnO of more than 9.50% by mass with respect to the total amount of the glass composition for glass fiber, the liquid phase temperature of the glass composition for glass fiber greatly increases, and thus stable manufacturing of glass fiber cannot be conducted. Also, the deviations from the elastic modulus and refractive index of normal E glass increase.

The glass composition for glass fiber of the present embodiment has a content of ZnO with respect to the total amount of the glass composition for glass fiber preferably in the range of 0.20 to 4.90% by mass, more preferably in the range of 0.30 to 2.90% by mass, still more preferably in the range of 0.40 to 1.90% by mass, particularly preferably in the range of 0.50 to 1.40% by mass, and most preferably in the range of 0.70 to 1.20% by mass.

When the glass composition for glass fiber of the present embodiment has a content of $SO_3$ of more than 2.00% by mass with respect to the total amount of the glass composition for glass fiber, reboil bubbles are easily generated and becomes responsible for thread breaking during manufacturing of glass fiber or for hollow fiber. Reboil bubbles here refer to bubbles that reboil due to a decrease in the solubility of gas dissolved in molten glass when the temperature of the molten glass increases or the like. Hollow fiber is glass fiber obtained by spinning molten glass including bubbles, including voids attributable to the bubbles present therein. Presence of voids inside the glass fiber is responsible for a decrease in the strength of the glass fiber.

The glass composition for glass fiber of the present embodiment has a content of $SO_3$ with respect to the total amount of the glass composition for glass fiber preferably in the range of 0.01 to 1.40% by mass, more preferably in the range of 0.05 to 0.90% by mass, and still more preferably in the range of 0.10 to 0.40% by mass.

When the glass composition for glass fiber of the present embodiment has a content of ZnO and $SO_3$ of less than 0.01% by mass in total with respect to the total amount of the glass composition for glass fiber, refining of the glass becomes insufficient, bubbles are more likely to be incorporated in the glass fiber, the possibility of glass fiber cutting attributable to these bubbles increases, and thus the productivity is degraded. On the other hand, when the content of ZnO and $SO_3$ is more than 11.50% by mass in total with respect to the total amount of the glass composition for glass fiber, spinning of glass fiber with an unmolten component remaining therein easily occurs, the unmolten component becomes a factor of glass fiber cutting, and thus the productivity is degraded.

The glass composition for glass fiber of the present embodiment has a content of ZnO and $SO_3$ in total with respect to the total amount of the glass composition for glass fiber preferably in the range of 0.10 to 3.90% by mass, more preferably in the range of 0.40 to 2.40% by mass, still more preferably in the range of 0.60 to 2.20% by mass, particularly preferably in the range of 0.80 to 1.90% by mass, and most preferably in the range of 1.10 to 1.60% by mass.

In the glass composition for glass fiber of the present embodiment, ZnO, $SO_3$, $TiO_2$ and the like are derived from impurities included in the glass fiber mineral material used as the glass raw material and a refining agent used in addition to the glass raw material during melting of glass. When glass fiber recovered from a glass fiber-reinforced resin molded product including E glass fiber is included as a portion of the glass raw material, ZnO, $SO_3$, $TiO_2$ and the like are derived from additives included in the glass fiber-reinforced resin molded product and remaining on the glass fiber surface. Examples of the resin used for the glass fiber-reinforced resin molded product here include a resin forming the glass fiber-reinforced resin molded product of the present embodiment described below, particularly a thermoplastic resin. Examples of the additives include a colorant (e.g., titanium oxide, zinc oxide, zinc sulfide, and carbon black), an antioxidant (e.g., a sulfur antioxidant and a phosphorus antioxidant), a flame retardant (e.g., a phosphorus flame retardant and an inorganic flame retardant), a plasticizer (e.g., a phosphorus plasticizer), a filler (e.g., talc, calcium carbonate, and aluminum hydroxide), a UV absorber, an antistatic agent, and a modifier.

When the glass composition for glass fiber of the present embodiment has a content of $Li_2O$, $Na_2O$, and $K_2O$

of more than 2.00% by mass in total with respect to the total amount of the glass composition for glass fiber, the strength of the glass fiber formed from the composition of the glass composition for glass fiber decreases, and the deviation from the strength of the normal E glass fiber increases.

The glass composition for glass fiber of the present embodiment has a content of $Li_2O$, $Na_2O$, and $K_2O$ in total with respect to the total amount of the glass composition for glass fiber preferably in the range of 0.11 to 1.40% by mass, more preferably in the range of 0.21 to 1.20% by mass, still more preferably in the range of 0.31 to 0.90% by mass, particularly preferably in the range of 0.41 to 0.79% by mass, and most preferably in the range of 0.51 to 0.59% by mass.

Further, the glass composition for glass fiber of the present embodiment may include MgO in the range of 0 to 3.00% by mass, $Fe_2O_3$ in the range of 0 to 2.00% by mass, and $F_2$ in the range of 0 to 2.00% by mass, with respect to the total amount of the glass composition for glass fiber.

The glass composition for glass fiber of the present embodiment has a content of MgO with respect to the total amount of the glass composition for glass fiber preferably in the range of 0.30 to 2.40% by mass, more preferably in the range of 0.60 to 1.90% by mass, still more preferably in the range of 0.70 to 1.40% by mass, particularly preferably in the range of 0.80 to 1.20% by mass, and most preferably in the range of 0.90 to 1.00% by mass.

The glass composition for glass fiber of the present embodiment has a content of $Fe_2O_3$ with respect to the total amount of the glass composition for glass fiber preferably in the range of 0. 10 to 0.90% by mass and more preferably in the range of 0.10 to 0.40% by mass.

The glass composition for glass fiber of the present embodiment has a content of $F_2$ with respect to the total amount of the glass composition for glass fiber preferably in the range of 0.10 to 1.90% by mass and more preferably in the range of 0.10 to 0.90% by mass.

Additionally, the glass composition for glass fiber of the present embodiment may further include $ZrO_2$, $Cr_2O_3$, and $SnO_2$.

The glass composition for glass fiber of the present embodiment has a content of $ZrO_2$ with respect to the total amount of the glass composition for glass fiber preferably in the range of 0.50%, more preferably in the range of less than 0.40% by mass, still more preferably in the range of less than 0.20% by mass, particularly preferably in the range of less than 0.10% by mass, and most preferably in the range of less than 0.05% by mass.

The glass composition for glass fiber of the present embodiment has a content of $Cr_2O_3$ with respect to the total amount of the glass composition for glass fiber preferably in the range of less than 0.10% by mass and more preferably in the range of less than 0.05% by mass. When glass fiber formed from the glass composition for glass fiber of the present embodiment has a content of $Cr_2O_3$ in the range and is formed into a molded product such as a composite material, occurrence of color unevenness, changes in the color tone, appearance defects, and the like due to coloration of glass can be suppressed.

The glass composition for glass fiber of the present embodiment has a content of $SnO_2$ with respect to the total amount of the glass composition for glass fiber preferably in the range of less than 1.00% by mass, more preferably in the range of less than 0.50%, still more preferably in the range of less than 0.40% by mass, particularly preferably in the range of less than 0.20% by mass, especially preferably in the range of less than 0.10% by mass, and most preferably in the range of less than 0.05% by mass.

The glass composition for glass fiber of the present embodiment may include, as impurities derived from raw materials, oxides of Ba, Sr, Co, Ni, Cu, Mo, W, Ce, Y, La, Bi, Gd, Pr, Sc, or Yb in the range of less than 1.00% by mass in total with respect to the total amount of the glass composition for glass fiber. Particularly when the glass composition for glass fiber of the present embodiment includes BaO, SrO, CoO, NiO, CuO, MoOs, $WO_3$, $CeO_2$, $Y_2O_3$, $La_2O_3$, $Bi_2O_3$, $Gd_2O_3$, $Pr_2O_3$, $Sc_2O_3$, or $Yb_2O_3$ as impurities, the content of each of the impurities is independently preferably in the range of less than 0.50% by mass, more preferably in the range of less than 0.40% by mass, still more preferably in the range of less than 0.20% by mass, particularly preferably in the range of less than 0.10% by mass, especially preferably in the range of less than 0.05% by mass, and most preferably in the range of less than 0.01% by mass.

The glass composition for glass fiber of the present embodiment is a glass raw material homogenized by mixing, melting, or the like a glass raw material including a glass fiber mineral material constituted by plural types of ores or a material purified from ores (may be referred to as an ore-derived purified material). The glass raw material may include glass fiber recovered from a glass fiber-reinforced resin molded product including E glass fiber (recovered glass fiber). Here, from the viewpoint of reducing environmental loads, the glass composition for glass fiber of the present embodiment is preferably a homogenized glass raw material including glass fiber recovered from a glass fiber-reinforced resin molded product including E glass fiber. In order that the glass fiber mineral raw material has a desired composition based on components included in the glass fiber mineral raw material, the content of each component, and the amount of each component volatilized in the melting process, the type of ore or ore-derived purified material and the content ratio of each ore or ore-derived purified material are determined. When the glass raw material includes the glass fiber mineral raw material and the recovered glass fiber, in order that the glass raw material have a desired composition based on components included in the glass fiber mineral raw material and the content of each component, components included in the recovered glass fiber and the content of each component, and the amount of each component volatilized in the melting process, the type of the ores or ore-derived purified material, the content ratio of each ore or ore-derived purified material, and the content ratio between the glass fiber mineral raw material and the recovered glass fiber are determined.

Examples of the ore include silica sand, feldspar, clay, and limestone. Examples of the ore-derived purified material include silica powder, dolomite, talc, clay, alumina, and soda ash. In the glass composition for glass fiber of the present embodiment, when the content SI of $SiO_2$, the content B of $B_2O_3$, the content T of $TiO_2$, the content Z of ZnO, and the content SO of $SO_3$ satisfy the following formula (A), stable spinning can be achieved, and the difference in the elastic modulus from that of normal E glass fiber can be 5% or less. From the viewpoint that the physical properties of the glass fiber formed from the composition of the glass composition for glass fiber of the present embodiment enables the difference in the elastic modulus from that of normal E glass to be 5% or less while enabling more stable spinning to be achieved, the SI, B, T, Z, and SO preferably satisfy the following formula (B) and more preferably satisfy the following formula (C). From the viewpoint that the physical properties of the glass fiber formed from the composition of the glass composition for glass fiber of the present embodiment come closer to the physical properties of normal E glass fiber while more stable spinning is enabled to be achieved, the SI, B, T, Z, and SO particularly preferably satisfy the following formula (D), especially preferably satisfy the following formula (E), extremely preferably satisfy the following formula (F), and most preferably satisfy the following formula (G).

$$1.79 \leq (SI/B) \times T/(Z + SO)^{1/4} \leq 122.98 \quad (A)$$

$$2.18 \leq (SI/B) \times T/(Z + SO)^{1/4} \leq 82.81 \quad (B)$$

$$2.28 \leq (SI/B) \times T/(Z + SO)^{1/4} \leq 43.17 \quad (C)$$

$$2.91 \leq (SI/B) \times T/(Z + SO)^{1/4} \leq 22.47 \quad (D)$$

$$5.37 \leq (SI/B) \times T/(Z + SO)^{1/4} \leq 21.01 \quad (E)$$

$$5.45 \leq (SI/B) \times T/(Z + SO)^{1/4} \leq 15.53 \quad (F)$$

$$5.45 \leq (SI/B) \times T/(Z + SO)^{1/4} \leq 8.01 \quad (G)$$

Regarding measurement of the content of each component described above in the glass composition for glass fiber of the present embodiment, the content of Li as the light element can be measured with an ICP emission spectroscopic analyzer, and the contents of the other elements can be measured with a wavelength dispersive X-ray fluorescence analyzer. As the measurement method, first, the glass composition for glass fiber is placed in a platinum crucible and melted with stirring while being held at a temperature of 1450°C for 6 hours in an electric furnace to obtain a homogeneous molten glass. Next, the obtained molten glass is poured from the platinum crucible onto a carbon plate to produce a glass cullet, and then the glass cullet is pulverized and powdered into glass powder. Regarding Li as a light element, the glass powder is thermally decomposed with an acid and then quantitatively analyzed using an ICP emission spectroscopic analyzer. Regarding other elements, the glass powder is molded into a disc shape by a pressing machine and then quantitatively analyzed using a wavelength dispersive X-ray fluorescence analyzer. These quantitative analysis results are converted in terms of oxides to calculate the content of each component and the total amount, and the above content (% by mass) of each component can be determined from these numerical values.

The glass fiber of the present embodiment is preferably glass long fiber formed from any of the glass compositions for glass fiber and having a length of at least 1000 m or more on manufacturing. The glass fiber of the present embodiment can be manufactured by melting and homogenizing a glass raw material prepared to have the composition of the glass composition for glass fiber of the present embodiment to form molten glass and spinning the molten glass to form glass fiber. Here, from the viewpoint of reducing environmental loads, the glass fiber of the present embodiment is preferably manufactured by melting and homogenizing a glass raw material including glass fiber recovered from a glass fiber-reinforced resin molded product including the E glass fiber to form molten glass and spinning the molten glass.

When the glass fiber of the present embodiment is manufactured, first, the glass raw material prepared as described above is supplied to a glass melting furnace, and is melted at a temperature range of 1000 poise temperature or more, specifically, a temperature range of 1200°C to 1500°C to form molten glass. The molten glass melted at the above temperature can be then discharged from 1 to 8000 nozzle tips or holes controlled at a predetermined temperature and cooled while stretched by winding at high speed to be solidified into glass fiber.

Glass single fiber (glass filament) discharged from one nozzle tip or hole, cooled and solidified typically has a perfect circle cross-sectional shape. On the other hand, when the above nozzle tip has a non-circular shape and has a protrusion or a notch for rapidly cooling the molten glass, controlling the temperature condition can provide a glass filament having a flat cross-sectional shape. When the glass filament has a flat cross-sectional shape, examples of the shape include long oval, ellipse, and rectangle. The long oval here means a rectangular shape of which short sides each are replaced with a semicircle having a diameter equivalent to the short sides.

When the cross-sectional shape of the glass filament is perfect-circular or substantially perfect-circular, the fiber diameter of the glass filament can be measured as follows. For example, first, the glass fiber is embedded in a resin such as an epoxy resin, and the resin is cured. The cured resin is cut, and the cross section is polished. Then, the cross section of the cured resin is observed using an electron microscope, and the diameter of 100 or more glass filaments exposed at the above cross section is measured. The filament diameter of the above glass filament also can be measured by image-processing images obtained with an electron microscope by an automatic analyzer.

Meanwhile, when the glass filament of the present embodiment is included in a glass fiber-reinforced resin molded product, the fiber diameter of the glass filament can be measured as follows. For example, first, a cross section of the glass fiber-reinforced resin molded product is polished. Then, the filament diameter of the glass filament is measured in the same manner as in the method for measuring the filament diameter of the glass filament in the glass fiber described above.

When the cross-sectional shape of the glass filament is a flat shape, the fiber diameter of the glass filament can be measured as follows. For example, first, the cross section of the glass filament is allowed to be observable in the same manner as in the method for measuring the filament diameter of the glass filament described above, and the cross-sectional area of 100 or more glass filaments is calculated. Then, the converted fiber diameter is calculated based on the cross-sectional area calculated. Then, the fiber diameter of the glass filament is calculated by determining the average value of the measured or calculated diameters or converted fiber diameters.

The converted fiber diameter of the glass filament here means the diameter of a perfect circle having an area equivalent to the area of the cross-sectional shape of the glass filament. The cross section of the glass filament means a transverse cross section perpendicular to the fiber length direction of the glass fiber.

The fiber diameter or converted fiber diameter of the glass filament constituting the glass fiber of the present embodiment is, for example, in the range of 3.0 to 100.0 $\mu$m, preferably in the range of 4.0 to 70.0 $\mu$m, and more preferably in the range of 5.0 to 50.0 $\mu$m.

When the glass filament constituting the glass fiber of the present embodiment comprises a flat cross-sectional shape, the ratio of the major axis to the minor axis in the cross section (major axis/minor axis) is, for example, in the range of 2.0 to 10.0 and preferably in the range of 3.0 to 8.0.

When the glass filament has a flat cross-sectional shape, the minor axis and the major axis of the glass fiber can be calculated as follows. For example, first, the cross section of the glass filament is allowed to be observable in the same manner as in the method for measuring the filament diameter of the glass filament described above, and the major axis and the minor axis each of 100 or more glass filaments are measured using an electron microscope, the major axis being the longest side passing through substantially the center of the glass filament cross section, the minor axis being the side orthogonally intersecting with the major axis at substantially the center of the glass filament cross section. Then, the calculation is made by determining the average value of measurements of the major axis or minor axis.

The glass fiber-reinforced resin molded product of the present embodiment includes the glass fiber of the present embodiment.

The glass fiber included in the glass fiber-reinforced resin molded product of the present embodiment may be ones processed in various forms, and examples of the form that may be taken by the glass fiber processed include chopped strands, rovings, and cut fiber.

The chopped strand is a form obtained by cutting glass fiber constituted by a predetermined number of glass filaments bundled (also referred to as glass fiber bundle or grass strand) into a predetermined length. The number of glass filaments constituting the glass fiber (number bundled) is in the range of preferably 1 to 20000, more preferably 50 to 10000, still more preferably 1000 to 8000. The glass fiber is cut into a length of preferably in the range of 1.0 to 100.0 mm, more preferably in the range of 1.2 to 51.0 mm, still more preferably in the range of 1.5 to 30.0 mm, particularly preferably in the range of 2.0 to 15.0 mm, and most preferably in the range of 2.3 to 7.8 mm.

The roving is a form of uncut glass fiber constituted by 10 to 30000 glass filaments bundled.

The cut fiber is a form of glass fiber pulverized to a length in the range of 0.001 to 0.900 mm by a known method such as a ball mill or Henschel mixer, the glass fiber being constituted by 1 to 20000 glass filaments bundled.

Examples of the resin forming the glass fiber-reinforced resin molded product of the present embodiment can include a thermoplastic resin or a thermosetting resin, but from the viewpoint of recyclability of the resin per se, a thermoplastic resin is preferred.

Examples of the thermoplastic resin forming the glass fiber-reinforced resin molded product of the present embodiment can include polyethylene, polypropylene, polystyrene, styrene/maleic anhydride resins, styrene/maleimide resins, polyacrylonitrile, acrylonitrile/styrene (AS) resins, acrylonitrile/butadiene/styrene (ABS) resins, chlorinated polyethylene/acrylonitrile/styrene (ACS) resins, acrylonitrile/ethylene/styrene (AES) resins, acrylonitrile/styrene/methyl acrylate (ASA) resins, styrene/acrylonitrile (SAN) resins, methacrylic resins, polyvinyl chloride (PVC), polyvinylidene chloride (PVDC), polyamide, polyacetal, polyethylene terephthalate (PET), polybutylene terephthalate (PBT), polytrimethylene terephthalate (PTT), polycarbonate, polyarylene sulfide, polyethersulfone (PES), polyphenylsulfone (PPSU), polyphenylene ether (PPE), modified polyphenylene ether (m-PPE), polyaryl etherketone, liquid crystal polymer (LCP), fluororesins, polyetherimide (PEI), polyarylate (PAR), polysulfone (PSF), polyamideimide (PAI), polyaminobismaleimide (PABM), thermoplastic polyimide (TPI), polyethylene naphthalate (PEN), ethylene/vinyl acetate (EVA) resins, ionomer (IO) resins, polybutadiene, styrene/butadiene resins, polybutylene, polymethylpentene, olefin/vinyl alcohol resins, cyclic olefin resins, cellulose resins, and polylactic acid.

Examples of the polyethylene can include high density polyethylene (HDPE), medium density polyethylene, low density polyethylene (LDPE), linear low density polyethylene (LLDPE), and ultra high molecular weight polyethylene.

Examples of the polypropylene can include isotactic polypropylene, atactic polypropylene, syndiotactic polypropylene, and mixtures thereof.

Examples of the polystyrene can include general-purpose polystyrene (GPPS), which is an atactic polystyrene having an atactic structure, high impact polystyrene (HIPS) with a rubber component added to GPPS, and syndiotactic polystyrene with syndiotactic structure.

Examples of the methacrylic resin can include polymers obtained by homopolymerizing one of acrylic acid, methacrylic acid, styrene, methyl acrylate, ethyl acrylate, ethyl methacrylate, butyl acrylate, butyl methacrylate, and fatty acid vinyl ester, or polymers obtained by copolymerizing two or more of these.

Examples of the polyvinyl chloride can include a vinyl chloride homopolymer, a copolymer of a vinyl chloride monomer and a copolymerizable monomer, or a graft copolymer obtained by graft polymerization of a vinyl chloride monomer to polymer polymerized by a conventionally known method such as emulsion polymerization method, suspension polymerization method, micro suspension polymerization method, or bulk polymerization method.

Examples of the polyamide can include one of components such as polycaproamide (polyamide 6), polyhexamethylene adipamide (polyamide 66), polytetramethylene adipamide (polyamide 46), polytetramethylene sebacamide (polyamide 410), polypentamethylene adipamide (polyamide 56), polypentamethylene sebacamide (polyamide 510), polyhexamethylene sebacamide (polyamide 610), polyhexamethylene dodecamide (polyamide 612), polydecamethylene adipamide (polyamide 106), polydecamethylene sebacamide (polyamide 1010), polydecamethylene dodecamide (polyamide 1012), polyundecanamide (polyamide 11), polyundecamethylene adipamide (polyamide 116), polydodecanamide (polyamide 12), polyxylene adipamide (polyamide XD6), polyxylene sebacamide (polyamide XD10), polymetaxylylene adipamide (polyamide MXD6), polyparaxylylene adipamide (polyamide PXD6), polytetramethylene terephthalamide (polyamide 4T), polypentamethylene terephthalamide (polyamide 5T), polyhexamethylene terephthalamide (polyamide 6T), polyhexamethylene isophthalamide (polyamide 6I), polynonamethylene terephthalamide (polyamide 9T), polydecamethylene terephthalamide (polyamide 10T), polyundecamethylene terephthalamide (polyamide 11T), polydodecamethylene terephthalamide (polyamide 12T), polytetramethylene isophthalamide (polyamide 4I), polybis(3-methyl-4-aminohexyl) methane terephthalamide (polyamide PACMT), polybis(3-methyl-4-aminohexyl) methane isophthalamide (polyamide PACMI), polybis(3-methyl-4-aminohexyl) methane dodecamide (polyamide PACM12), polybis(3-methyl-4-aminohexyl)methanetetradecamide (polyamide PACM14), or a copolymer obtained by a combination of a plurality of components of two or more thereof, or a mixture thereof.

Examples of the polyacetal can include a homopolymer with oxymethylene units as the main repeating unit, and a copolymer mainly consisting of oxymethylene units and containing oxyalkylene units having 2 to 8 adjacent carbon atoms in the main chain.

Examples of the polyethylene terephthalate can include a polymer obtained by polycondensation of terephthalic acid or a derivative thereof with ethylene glycol.

Examples of the polybutylene terephthalate can include a polymer obtained by polycondensation of terephthalic acid or a derivative thereof with 1,4-butanediol.

Examples of the polytrimethylene terephthalate can include polymers obtained by polycondensation of terephthalic acid or a derivative thereof with 1,3-propanediol.

Examples of the polycarbonate can include polymers obtained by a transesterification method in which a dihydroxydiaryl compound is reacted with a carbonate such as diphenyl carbonate in a molten state; or polymers obtained by phosgene method in which a dihydroxyaryl compound is reacted with phosgene.

Examples of the polyarylene sulfide can include linear polyphenylene sulfide, cross linked polyphenylene sulfide having a high molecular weight obtained by performing a curing reaction after polymerization, polyphenylene sulfide sulfone, polyphenylene sulfide ether, and polyphenylene sulfide ketone.

Examples of the modified polyphenylene ether can include: a polymer alloy of poly(2,6-dimethyl-1,4-phenylene)ether and polystyrene; a polymer alloy of poly(2,6-dimethyl-1,4-phenylene)ether and a styrene/butadiene copolymer; a polymer alloy of poly(2,6-dimethyl-1,4-phenylene)ether and a styrene/maleic anhydride copolymer; a polymer alloy of poly(2,6-dimethyl-1,4-phenylene)ether and polyamide; and a polymer alloy of poly(2,6-dimethyl-1,4-phenylene)ether and styrene/butadiene/acrylonitrile copolymer.

Examples of the polyaryl etherketone can include polyetherketone (PEK), polyetheretherketone (PEEK), polyetherketoneketone (PEKK), and polyetheretherketoneketone (PEEKK).

Examples of the liquid crystal polymer (LCP) include a polymer (copolymer) composed of one or more structural units selected from aromatic hydroxycarbonyl units which are thermotropic liquid crystal polyesters, aromatic dihydroxy units, aromatic dicarbonyl units, aliphatic dihydroxy units, aliphatic dicarbonyl units, and the like.

Examples of the fluororesin can include polytetrafluoroethylene (PTFE), perfluoroalkoxy resins (PFA), fluorinated ethylene propylene resins (FEP), fluorinated ethylene tetrafluoroethylene resins (ETFE), polyvinyl fluoride (PVF), polyvinylidene fluoride (PVDF), polychlorotrifluoroethylene (PCTFE), and ethylene/chlorotrifluoroethylene resin (ECTFE).

Examples of the ionomer (IO) resin can include copolymers of an olefin or a styrene and an unsaturated carboxylic acid, wherein a part of carboxyl groups is neutralized with a metal ion.

Examples of the olefin/vinyl alcohol resin can include ethylene/vinyl alcohol copolymers, propylene/vinyl alcohol copolymers, saponified products of ethylene/vinyl acetate copolymers, and saponified products of propylene/vinyl acetate copolymers.

Examples of the cyclic olefin resin can include monocyclic compounds such as cyclohexene, polycyclic compounds such as tetracyclopentadiene, and polymers of cyclic olefin monomers.

Examples of the polylactic acid can include poly-L-lactic acid which is a homopolymer of L-form, poly-D-lactic acid which is a homopolymer of D-form, or a stereocomplex polylactic acid which is a mixture thereof.

Examples of the cellulose resin can include methylcellulose, ethyl cellulose, hydroxy cellulose, hydroxymethylcellulose, hydroxyethyl cellulose, hydroxyethyl methylcellulose, hydroxypropylmethylcellulose, cellulose acetate, cellulose propionate, and cellulose butyrate. Examples of the thermosetting resin forming the glass fiber-reinforced resin molded product of the present embodiment can include unsaturated polyester resins, vinyl ester resins, epoxy (EP) resins, melamine (MF) resins, phenol resins (PF), urethane resins (PU), polyisocyanate, polyisocyanurate, polyimide (PI), urea (UF) resins, silicone (SI) resins, furan (FR) resins, benzoguanamine (BR) resins, alkyd resins, xylene resins, bismaleimide triazine (BT) resins, and diallyl phthalate resin (PDAP).

The glass fiber-reinforced resin molded product of the present embodiment can be obtained by, for example, kneading the chopped strands and the resin in a twin-screw kneader and injection-molding the obtained resin pellets.

The glass fiber-reinforced resin molded product also may be one obtained by a known molding method such as injection compression molding method, two-color molding method, hollow molding method, foam molding method (including supercritical fluid foam molding method), insert molding method, in-mold coating molding method, extrusion molding method, sheet molding method, thermoforming method, rotational molding method, laminate molding method, press molding method, blow molding method, stamping molding method, infusion method, hand lay-up method, spray-up method, resin transfer molding method, sheet molding compound method, bulk molding compound method, pultrusion method, and filament winding method.

In the glass fiber-reinforced resin molded product of the present embodiment, the number average fiber length of the glass fiber of the present embodiment is, for example, in the range of 50 to 400 $\mu$m, preferably in the range of 75 to 300 $\mu$m, more preferably in the range of 100 to 380 $\mu$m, still more preferably in the range of 120 to 350 $\mu$m, particularly preferably in the range of 150 to 320 $\mu$m, especially preferably in the range of 170 to 290 $\mu$m, and most preferably in the range of 205 to 285 $\mu$m.

In the glass fiber-reinforced resin molded product of the present embodiment, the number average fiber length of the glass fiber of the present embodiment can be calculated by the following method. First, the glass fiber-reinforced resin molded product is heated in a muffle furnace at 650°C for 0.5 to 24 hours to decompose organic matter. Then, the remaining glass fiber is transferred to a glass petri dish, and the glass fiber is dispersed using acetone on the surface of the petri dish. Subsequently, the fiber length of 1000 or more glass fibers dispersed on the petri dish surface is measured using a stereoscopic microscope, and the average value thereof is determined to calculate the number average fiber length of the glass fiber.

The glass fiber included in the glass fiber-reinforced resin molded product of the present embodiment may be coated with an organic matter on the surface thereof for the purposes such as improvement of adhesiveness between glass fiber and a resin and improvement of uniform dispersibility of glass fiber in a mixture of glass fiber and a resin. Examples of such an organic matter include a resin or a silane coupling agent. The organic matter may be a composition including a lubricant, a surfactant, and the like, in addition to such a resin or silane coupling agent.

The organic matter covers the glass fiber at a rate in the range of 0.1 to 2.0% by mass based on the mass of the glass fiber in a state where it is not coated with the organic matter.

The glass fiber can be coated with an organic matter by applying the sizing agent or binder including a solution of the resin, the silane coupling agent, or a composition to the glass fiber using a known method such as a roller applicator, for example, in the manufacturing process of the glass fiber and then drying the glass fiber to which the solution of the resin, the silane coupling agent, or the composition is applied.

Examples of the resin can include urethane resins, epoxy resins, vinyl acetate resins, acrylic resins, modified polypropylene, particularly carboxylic acid-modified polypropylene, and a copolymer of (poly)carboxylic acid (particularly maleic acid) and an unsaturated monomer.

Examples of the silane coupling agent can include aminosilanes, chlorosilanes, epoxysilanes, mercaptosilanes, vinylsilanes, acrylsilanes, and cationic silanes. As the silane coupling agent, these compounds can be used singly or in combination of two or more.

Examples of the aminosilane include γ-aminopropyltnethoxysilane, N-β-(aminoethyl)-γ-aminopropyltrimethoxysilane, N-β-(aminoethyl)-N'-β-(aminoethyl)-γ-aminopropyltrimethoxysilane, and γ-anilinopropyltrimethoxysilane.

Examples of the chlorosilane include γ-chloropropyltrimethoxysilane.

Examples of the epoxysilane include γ-glycidoxypropyltrimethoxysilane and β-(3,4-epoxy cyclohexyl)ethyltrimethoxysilane.

Examples of the mercaptosilane can include γ-mercaptotrimethoxysilane.

Examples of the vinylsilane include vinyl trimethoxysilane and N-β-(N-vinylbenzylaminoethyl)-γ-aminopropyltrimethoxysilane.

Examples of the acrylsilane include γ-methacryloxypropyltrimethoxysilane.

Examples of the cationic silane include N-(vinylbenzyl)-2-aminoethyl-3-aminopropyltrimethoxysilane hydrochloride and N-phenyl-3-aminopropyltrimethoxysilane hydrochloride.

Examples of the lubricant include modified silicone oils, animal oils and hydrogenated products thereof, vegetable oils and hydrogenated products thereof, animal waxes, vegetable waxes, mineral waxes, condensates of a higher saturated fatty acid and a higher saturated alcohol, polyethyleneimine, polyalkylpolyamine alkylamide derivatives, fatty acid amides, and quaternary ammonium salts. As the lubricant, these can be used singly or in combinations of two or more.

Examples of the animal oil include beef tallow.

Examples of the vegetable oil include soybean oil, coconut oil, rapeseed oil, palm oil, and castor oil.

Examples of the animal wax include beeswax and lanolin.

Examples of the vegetable wax include candelilla wax and carnauba wax.

Examples of the mineral wax include paraffin wax and montan wax.

Examples of the condensate of a higher saturated fatty acid and a higher saturated alcohol include stearates such as lauryl stearate.

Examples of the fatty acid amide include dehydrated condensates of a polyethylenepolyamine such as diethylenetriamine, triethylenetetramine, or tetraethylenepentamine and a fatty acid such as lauric acid, myristic acid, palmitic acid, or stearic acid.

Examples of the quaternary ammonium salt include alkyltrimethylammonium salts such as lauryltrimethylammonium chloride.

Examples of the surfactant can include nonionic surfactants, cationic surfactants, anionic surfactants, and amphoteric surfactants. As the surfactant, these can be used singly or in combination of two or more.

Examples of the nonionic surfactant can include ethylene oxide propylene oxide alkyl ether, polyoxyethylene alkyl ether, polyoxyethylene-polyoxypropylene-block copolymer, alkyl polyoxyethylene-polyoxypropylene block copolymer ether, polyoxyethylene fatty acid ester, polyoxyethylene fatty acid monoester, polyoxyethylene fatty acid diester, polyoxyethylene sorbitan fatty acid ester, glycerol fatty acid ester ethylene oxide adduct, polyoxyethylene castor oil ether, hydrogenated castor oil ethylene oxide adduct, alkylamine ethylene oxide adduct, fatty acid amide ethylene oxide adduct, glycerol fatty acid ester, polyglycerol fatty acid ester, pentaerythritol fatty acid ester, sorbitol fatty acid ester, sorbitan fatty acid ester, sucrose fatty acid ester, polyhydric alcohol alkyl ether, fatty acid alkanolamide, acetylene glycol, acetylene alcohol, ethylene oxide adduct of acetylene glycol, and ethylene oxide adduct of acetylene alcohol.

Examples of the cationic surfactant can include alkyldimethylbenzylammonium chloride, alkyltrimethylammonium chloride, alkyl dimethyl ethyl ammonium ethyl sulfate, higher alkylamine acetate, higher alkylamine hydrochloride, adduct of ethylene oxide to a higher alkylamine, condensate of a higher fatty acid and polyalkylene polyamine, a salt of an ester of a higher fatty acid and alkanolamine, a salt of higher fatty acid amide, imidazoline cationic surfactant, and alkyl pyridinium salt.

Examples of the anionic surfactant can include higher alcohol sulfate salts, higher alkyl ether sulfate salts, α-olefin sulfate salts, alkylbenzene sulfonate salts, α-olefin sulfonate salts, reaction products of fatty acid halide and N-methyl taurine, dialkyl sulfosuccinate salts, higher alcohol phosphate ester salts, and phosphate ester salts of higher alcohol ethylene oxide adduct. Examples of the amphoteric surfactant can include amino acid amphoteric surfactants such as alkali metal salts of alkylaminopropionic acid, betaine amphoteric surfactants such as alkyldimethylbetaine, and imidazoline amphoteric surfactants.

The glass fiber-reinforced resin molded product can be used in, for example, housings and parts such as frames of portable electronic devices including smartphones, automobile electrical parts such as battery tray covers, sensors, and coil bobbins, electronic device parts other than those for portable electronic devices, and electrical connecting terminal parts.

Examples and Comparative Examples of the present invention will be shown.

Examples

At first, glass raw material was mixed to obtain a glass batch so that the glass composition after melt-solidification was the composition of Examples 1 to 10 and Comparative Examples 1 to 4 shown in Tables 1 to 2. The obtained glass batch was placed in a platinum crucible, and while this platinum crucible was held in an electric furnace for 4 hours under temperature conditions in the range of 1400 to 1550°C, the glass raw material was melted with stirring to obtain a homogeneous molten glass. Next, the platinum crucible including the molten glass was taken out of the electric furnace to cool the molten glass. Next, the molten glass was tapped out of the platinum crucible, then heated at a strain removal temperature (600 to 700°C) for 2 hours in order to remove the strain of the glass, and cooled to room temperature (20 to 25°C) over 8 hours to thereby obtain a glass cullet mass.

Next, the elastic modulus of the glass, the difference in the elastic modulus from that of normal E glass (hereinafter, may be referred to as standard E glass) fiber, the thermal expansion coefficient, and the working temperature range were evaluated as follows. The results are shown in Tables 1 to 2.

[Elastic modulus]

The glass cullet mass was processed into a test piece of 25 mm × 25 mm × 5 mm using a cutting machine, for example, a diamond cutter and a grinder, and as an index of the elastic modulus, the Young's modulus was measured by an ultrasonic pulse method in accordance with JIS R1602:1995.

[Thermal expansion coefficient]

The glass cullet mass was processed into a test piece of 4 mm × 4 mm × 20 mm using a cutting machine, for example, a diamond cutter and a grinder. Next, the obtained test piece was heated at a temperature increase rate of 10°C/min, and its amount of elongation was measured at a temperature in the range of 50 to 200°C using a thermomechanical analyzer (manufactured by Hitachi High-Tech Science Corporation). The linear expansion coefficient was calculated from the amount of elongation to determine the thermal expansion coefficient of the glass fiber.

[Difference in elastic modulus from that of standard E glass fiber]

The Young's modulus was measured as an index of the elastic modulus in the entirely same manner as for the glass compositions for glass fiber of Examples 1 to 10 and Comparative Examples 1 to 4 except for using a glass composition for glass fiber comprising standard E glass composition, and the difference in the Young's moduli of the glass compositions for glass fiber of Examples 1 to 10 and Comparative Examples 1 to 4 therefrom were determined.

[Working temperature range]

The glass composition for glass fiber was placed in a platinum crucible and melted with stirring while being held at a temperature of 1550°C for 6 hours in an electric furnace to obtain a homogeneous molten glass. Next, the obtained molten glass is poured onto a carbon plate to produce a glass cullet. At this time, the 1000 poise temperature and the liquid phase temperature of the molten glass were measured, and the working temperature range was calculated from the difference between the 1000 poise temperature and the liquid phase temperature.

For the liquid phase temperature, first, the glass cullet was pulverized, 40 g of glass particles having a particle diameter of 0.5 to 1.5 mm was placed in a platinum boat of 180 mm × 20 mm × 15 mm and heated in a tubular electric furnace provided with a temperature gradient in the range of 900 to 1200°C for 8 hours or more, then taken out of the tubular electric furnace, and observed with a polarized light microscope to identify the point at which crystals derived from glass (devitrification) began to precipitate. The temperature inside the tubular electric furnace was actually measured using a type B thermocouple to determine the temperature of the point at which the crystals began to precipitate, which temperature was taken as the liquid phase temperature.

The 1000 poise temperature was determined by melting glass cullet in a platinum crucible using a high temperature electric furnace equipped with a rotational viscometer (manufactured by Shibaura Systems Co., Ltd.), continuously measuring the viscosity of the molten glass using a Brookfield rotational viscometer while varying the melt temperature, and measuring the temperature at which the rotational viscosity was 1000 poise.

[Table 1]

| | Example 1 | Example 2 | Example 3 | Example 4 | Example 5 | Example 6 | Example 7 |
|---|---|---|---|---|---|---|---|
| $SiO_2$ (% by mass) | 54.08 | 54.03 | 53.76 | 53.84 | 53.76 | 52.48 | 51.39 |
| $B_2O_3$ (% by mass) | 6.27 | 6.27 | 6.24 | 6.25 | 6.24 | 6.09 | 6.2 |
| $Al_2O_3$ (% by mass) | 14.19 | 14.18 | 14.11 | 14.13 | 14.11 | 13.77 | 14.10 |
| CaO (% by mass) | 22.56 | 22.52 | 22.41 | 22.45 | 22.41 | 21.89 | 21.74 |
| MgO (% by mass) | 1.00 | 1.00 | 0.99 | 0.99 | 0.99 | 0.97 | 0.95 |
| $Li_2O$ (% by mass) | 0.00 | 0.00 | 0.00 | 0.00 | 0.00 | 0.00 | 0.00 |
| $Na_2O$ (% by mass) | 0.50 | 0.50 | 0.50 | 0.50 | 0.50 | 0.48 | 0.47 |
| $K_2O$ (% by mass) | 0.07 | 0.07 | 0.07 | 0.07 | 0.07 | 0.07 | 0.07 |
| $Li_2O+Na_2O+K_2O$ (% by mass) | 0.57 | 0.57 | 0.57 | 0.57 | 0.57 | 0.55 | 0.54 |
| $TiO_2$ (% by mass) | 0.35 | 0.50 | 1.00 | 0.35 | 0.50 | 0.35 | 0.35 |
| $Fe_2O_3$ (% by mass) | 0.20 | 0.20 | 0.20 | 0.20 | 0.20 | 0.19 | 0.19 |
| $F_2$ (% by mass) | 0.70 | 0.70 | 0.69 | 0.69 | 0.69 | 0.68 | 0.66 |
| $SO_3$ (% by mass) | 0.03 | 0.03 | 0.03 | 0.03 | 0.03 | 0.03 | 0.03 |
| $Cr_2O_3$ (% by mass) | 0.00 | 0.00 | 0.00 | 0.00 | 0.00 | 0.00 | 0.00 |
| ZnO (% by mass) | 0.05 | 0.00 | 0.00 | 0.50 | 0.50 | 3.00 | 3.80 |
| $P_2O_5$ (% by mass) | 0.00 | 0.00 | 0.00 | 0.00 | 0.00 | 0.00 | 0.00 |
| $ZnO+SO_3$ (% by mass) | 0.08 | 0.03 | 0.03 | 0.53 | 0.53 | 3.03 | 3.83 |
| Total (% by mass) | 100.0 | 100.0 | 100.0 | 100.0 | 100.0 | 100.0 | 100.0 |
| $(SI/B)\times T/(Z+SO)^{1/4}$ | 5.68 | 10.35 | 20.70 | 3.53 | 5.05 | 2.29 | 2.07 |
| Elastic modulus (GPa) | 88.3 | 88.4 | 88.7 | 88.6 | 88.8 | 90.6 | 92.2 |
| Difference in elastic modulus from that of standard E glass | 0.3% | 0.4% | 0.8% | 0.7% | 0.9% | 3.0% | 4.8% |
| Thermal expansion coefficient (ppm/°C) | 5.6 | 5.6 | 5.6 | 5.7 | 5.7 | 6.2 | 6.7 |
| Working temperature range (°C) | 139 | 138 | 132 | 133 | 131 | 97 | 86 |

[Table 2]

| | Example 8 | Example 9 | Example 10 | Comparative Example 1 | Comparative Example 2 | Comparative Example 3 | Comparative Example 4 |
|---|---|---|---|---|---|---|---|
| $SiO_2$ (% by mass) | 52.13 | 52.67 | 51.59 | 49.30 | 54.19 | 50.50 | 53.10 |
| $B_2O_3$ (% by mass) | 6.05 | 6.11 | 5.99 | 6.80 | 7.50 | 5.86 | 5.00 |
| $Al_2O_3$ (% by mass) | 13.68 | 13.82 | 13.54 | 13.20 | 13.01 | 13.25 | 12.20 |
| CaO (% by mass) | 21.47 | 21.97 | 21.49 | 21.03 | 22.60 | 21.05 | 21.33 |
| MgO (% by mass) | 0.96 | 0.97 | 0.95 | 0.93 | 1.00 | 0.93 | 0.94 |
| $Li_2O$ (% by mass) | 0.00 | 0.00 | 0.00 | 0.00 | 0.00 | 0.00 | 0.00 |
| $Na_2O$ (% by mass) | 0.48 | 0.49 | 0.48 | 0.46 | 0.50 | 0.47 | 0.47 |
| $K_2O$ (% by mass) | 0.07 | 0.07 | 0.07 | 0.06 | 0.07 | 0.07 | 0.07 |
| $Li_2O+Na_2O+K_2O$ (% by mass) | 0.55 | 0.56 | 0.55 | 0.52 | 0.57 | 0.54 | 0.54 |
| $TiO_2$ (% by mass) | 3.00 | 3.00 | 5.00 | 0.35 | 0.10 | 7.00 | 6.00 |
| $Fe_2O_3$ (% by mass) | 0.19 | 0.19 | 0.19 | 0.19 | 0.20 | 0.19 | 0.19 |
| $F_2$ (% by mass) | 0.67 | 0.68 | 0.67 | 0.65 | 0.70 | 0.65 | 0.66 |
| $SO_3$ (% by mass) | 0.30 | 0.03 | 0.03 | 0.03 | 0.03 | 0.03 | 0.02 |
| $Cr_2O_3$ (% by mass) | 0.00 | 0.00 | 0.00 | 0.00 | 0.00 | 0.00 | 0.00 |
| ZnO (% by mass) | 1.00 | 0.00 | 0.00 | 7.00 | 0.10 | 0.00 | 0.02 |
| $P_2O_5$ (% by mass) | 0.00 | 0.00 | 0.00 | 0.00 | 0.00 | 0.00 | 0.00 |
| $ZnO+SO_3$ (% by mass) | 1.30 | 0.03 | 0.03 | 7.03 | 0.13 | 0.03 | 0.04 |
| Total (% by mass) | 100.0 | 100.0 | 100.0 | 100.0 | 100.0 | 100.0 | 100.0 |
| $(SI/B) \times T/(Z+SO)^{1/4}$ | 24.21 | 62.14 | 103.47 | 1.56 | 1.20 | 144.95 | 142.48 |
| Elastic modulus (GPa) | 90.9 | 90.1 | 91.5 | 93.8 | 83.0 | 92.9 | 92.2 |
| Difference in elastic modulus from that of standard E glass | 3.3% | 2.4% | 4.0% | 6.6% | 5.7% | 5.6% | 4.8% |
| Thermal expansion coefficient (ppm/°C) | 5.8 | 5.6 | 5.5 | 7.1 | 5.5 | 5.5 | 5.5 |
| Working temperature range (°C) | 93 | 108 | 83 | 40 | 142 | 58 | 70 |

As can be seen from Tables 1 to 2, according to the glass compositions for glass fiber of Examples 1 to 10, in which the content SI of $SiO_2$, the content B of $B_2O_3$, the content T of $TiO_2$, the content Z of ZnO, and the content SO of $SO_3$ satisfy the formula (1), it is possible to suppress narrowing of the working temperature range of the glass fiber and occurrence of a difference in the elastic modulus from that of standard E glass fiber. In contrast, according to the glass compositions for glass fiber of Comparative Examples 1 to 4, in which the content SI of $SiO_2$, the content B of $B_2O_3$, the content T of $TiO_2$, the content Z of ZnO, and the content SO of $SO_3$ do not satisfy the formula (1), it is obviously not possible to suppress narrowing of the working temperature range of the glass fiber and occurrence of a difference in the elastic modulus from that of standard E glass fiber.

## Claims

1. A glass composition for glass fiber comprising:

$SiO_2$ in a range of 45.60 to 59.00% by mass,
$B_2O_3$ in a range of 0.00 to 8.00% by mass,
$Al_2O_3$ in a range of 10.00 to 16.00% by mass,
CaO in a range of 17.00 to 25.00% by mass,
$TiO_2$ in a range of 0.01 to 9.50% by mass,
$P_2O_5$ in a range of less than 0.03% by mass,
ZnO in a range of 0.00 to 9.50% by mass,
$SO_3$ in a range of 0.00 to 2.00% by mass,
ZnO and $SO_3$ in a range of 0.01 to 11.50% by mass in total, and
$Li_2O$, $Na_2O$, and $K_2O$ in a range of 0.00 to 2.00% by mass in total, with respect to a total amount of the glass composition for glass fiber, wherein
a content SI of $SiO_2$, a content B of $B_2O_3$, a content T of $TiO_2$, a content Z of ZnO, and a content SO of $SO_3$ satisfy following formula (1):

$$1.79 \leq (SI/B) \times T/(Z + SO)^{1/4} \leq 122.98 \qquad (1).$$

2. The glass composition for glass fiber according to claim 1, wherein the content SI of $SiO_2$, the content B of $B_2O_3$, the content T of $TiO_2$, the content Z of ZnO, and the content SO of $SO_3$ satisfy following formula (2):

$$2.91 \leq (SI/B) \times T/(Z + SO)^{1/4} \leq 22.47 \qquad (2).$$

3. The glass composition for glass fiber according to claim 1, wherein the content SI of $SiO_2$, the content B of $B_2O_3$, the content T of $TiO_2$, the content Z of ZnO, and the content SO of $SO_3$ satisfy following formula (3):

$$5.37 \leq (SI/B) \times T/(Z + SO)^{1/4} \leq 21.01 \qquad (3).$$

4. Glass fiber formed from the glass composition for glass fiber according to any one of claim 1 to claim 3.

5. A glass-fiber-reinforced resin molded product comprising the glass fiber according to claim 4.

## INTERNATIONAL SEARCH REPORT

| International application No. |
| --- |
| **PCT/JP2022/023493** |

**A. CLASSIFICATION OF SUBJECT MATTER**

*C03C 13/02*(2006.01)i; *B29C 70/12*(2006.01)i; *B29C 70/28*(2006.01)i
FI: C03C13/02; B29C70/12; B29C70/28

According to International Patent Classification (IPC) or to both national classification and IPC

**B. FIELDS SEARCHED**

Minimum documentation searched (classification system followed by classification symbols)

C03C1/00 -14/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

INTERGLAD

**C. DOCUMENTS CONSIDERED TO BE RELEVANT**

| Category* | Citation of document, with indication, where appropriate, of the relevant passages | Relevant to claim No. |
| --- | --- | --- |
| X | US 2006/0166805 A1 (LI, Hong) 27 July 2006 (2006-07-27) claims 1, 14-15, paragraphs [0003], [0039], examples 1-10 of table 2 | 1-5 |
| Y | | 5 |
| X | JP 2015-193522 A (NIPPON ELECTRIC GLASS CO., LTD.) 05 November 2015 (2015-11-05) claims 3-7, paragraphs [0002], [0041]-[0044], [0052]-[0055], tables 2, 3, example 1, compositions 1-6, 8, 10 of example 3 | 1-2, 4-5 |
| Y | | 5 |
| A | | 3 |
| X | JP 10-231142 A (NIPPON ELECTRIC GLASS CO., LTD.) 02 September 1998 (1998-09-02) claim 1, paragraphs [0001], [0025]-[0027], [0036], tables 2, 3, examples 1-6, 8-11 | 1, 4-5 |
| Y | | 5 |
| A | | 2-3 |

☑ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 August 2022** | **16 August 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**EP 4 299 541 A1**

| | INTERNATIONAL SEARCH REPORT | International application No. |
|---|---|---|
| | | **PCT/JP2022/023493** |

**C.    DOCUMENTS CONSIDERED TO BE RELEVANT**

| Category* | Citation of document, with indication, where appropriate, of the relevant passages | Relevant to claim No. |
|---|---|---|
| X | JP 57-077043 A (ASAHI FIBER GLASS KK) 14 May 1982 (1982-05-14) claims, page 1, lower left column, lines 14-17, page 2, lower left column, line 15 to lower right column, line 10, lower right column, lines 11-14, compositions I, II of examples | 1-4 |
| Y | | 5 |
| X | JP 2005-506267 A (PPG INDUSTRIES OHIO, INC.) 03 March 2005 (2005-03-03) claims 86-93, paragraphs [0003]-[0005], [0199], [0200], tables 20-1, 20-2, examples 273, 275, 282 | 1, 4-5 |
| A | | 2-3 |
| X | JP 2017-513802 A (SAINT-GOBAIN GLASS FRANCE) 01 June 2017 (2017-06-01) claim 1, paragraphs [0043]-[0046], [0048], example 1, table 1, fig. 2 | 1-4 |
| A | | 5 |

Form PCT/ISA/210 (second sheet) (January 2015)

17

**INTERNATIONAL SEARCH REPORT**
Information on patent family members

| | International application No. |
|---|---|
| | **PCT/JP2022/023493** |

| Patent document cited in search report | | | Publication date (day/month/year) | Patent family member(s) | | | Publication date (day/month/year) |
|---|---|---|---|---|---|---|---|
| US | 2006/0166805 | A1 | 27 July 2006 | WO<br>claims 1, 14-15, paragraphs [0002], [0035], table 2, examples 1-10<br>EP<br>TW<br>CN | 2004/020355<br><br><br>1546051<br>200420514<br>1688515 | A1<br><br><br>A1<br>A<br>A | |
| JP | 2015-193522 | A | 05 November 2015 | CN | 104944772 | A | |
| JP | 10-231142 | A | 02 September 1998 | (Family: none) | | | |
| JP | 57-077043 | A | 14 May 1982 | (Family: none) | | | |
| JP | 2005-506267 | A | 03 March 2005 | US<br>claims 86-93, paragraphs [0004]-[0007], [0212], table 20, examples 273, 275, 282<br>WO<br>EP<br>CN<br>KR | 2003/0207748<br><br><br><br>2000/073231<br>2330085<br>1589243<br>10-0711333 | A1<br><br><br><br>A1<br>A1<br>A<br>B1 | |
| JP | 2017-513802 | A | 01 June 2017 | US<br>claim 1, paragraphs [0046]-[0048], [0050], example 1, fig. 2<br>WO<br>EP<br>CA<br>KR | 2017/0044058<br><br><br>2015/166169<br>3137295<br>2944338<br>10-2016-0145618 | A1<br><br><br>A1<br>A1<br>A<br>A | |

Form PCT/ISA/210 (patent family annex) (January 2015)

**REFERENCES CITED IN THE DESCRIPTION**

**Patent documents cited in the description**

- JP H6234879 A